# EUROPEAN PATENT SPECIFICATION

(11) **EP 3 095 649 B1**
(45) Date of publication and mention of the grant of the patent: **11.12.2019**
(21) Application number: 15305746.8
(22) Date of filing: 19.05.2015
(51) Int. Cl.: B60S 1/24, B60S 1/16, F16C 11/06, F16C 3/08, B21D 3/00, B21D 3/16

(54) **WINDSCREEN WIPER MOTOR UNIT**
SCHEIBENWISCHERMOTOREINHEIT
UNITÉ DE MOTEUR D'ESSUIE-GLACE

(43) Date of publication of application: 23.11.2016
(73) Proprietor: Valeo Systèmes d'Essuyage, 78322 Le Mesnil Saint Denis (FR); Valeo Autosystemy SP. Z.O.O., 32-050 Skawina (PL)
(72) Inventor: Orzel, Wojciech, 32-050 SKAWINA (PL); Lassalle, Christophe, 86450 Leigne les Bois (FR)
(74) Representative: Valeo Systèmes d'Essuyage

(56) References cited:
- FR-A1- 2 969 557
- GB-A- 2 088 707
- JP-A- S6 416 457
- KR-A- 20130 118 608
- US-A- 2 260 283

## Description

The present invention belongs to the domain of the windscreen wipers for motor vehicles and in particular of the windscreen wiper units comprising the wiper motor, the output shaft and the crank configured for transmitting the wiper motor torque to a linkage rod or a wiper arm.

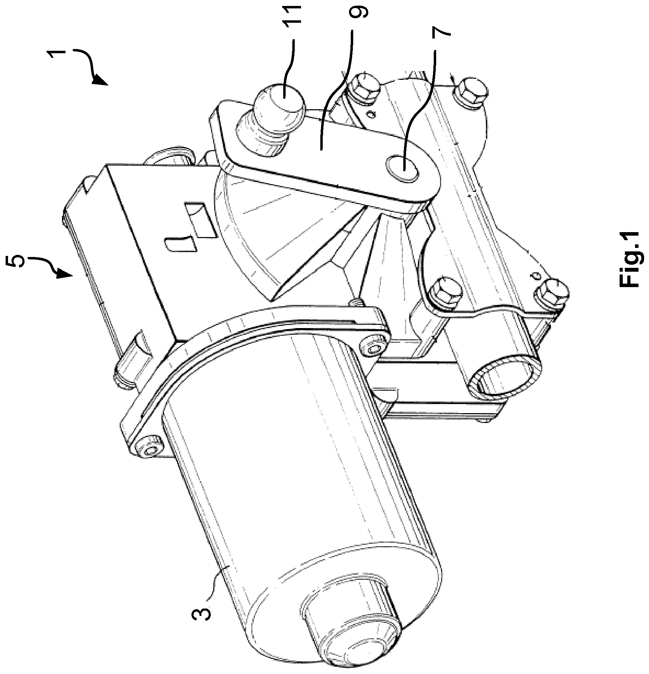

Figure 1 represents an example of a wiper motor unit 1 according to the state of the art. It comprises an electric motor 3 and a drive unit 5 comprising a gearwheel which is linked to an output shaft 7. A crank 9 is crimped to the output shaft and a ball stud 11 is crimped to the crank 9. The ball stud 11 is configured for receiving a linkage rod (not represented) on which are fixed the wipers.

Another embodiment is represented on the document KR 2013 011 860 8 A which discloses a windscreen wiper unit comprising a wiper motor, an output shaft and a crank, according to the state of the art.

However, the crimping process for fixing the crank 9 to the output shaft 7 and the ball stud 11 to the crank 7 involves some drawbacks such as the process tolerances of the different parts that need to be reduced to ensure a good crimping which induces expensive pieces and the crimping process itself which is technically difficult.

It is therefore an object of the present invention to overcome the above mentioned drawbacks of the state of the art and to provide a solution that enables to ease the manufacturing process and the assembly of the different pieces allowing the transmission of the torque from the output shaft of a wiper motor unit to the linkage rod of the wiper equipment.

Thus, the present invention refers to a windscreen wiper unit for a motor vehicle comprising :
- a wiper motor,
- a drive unit with an output shaft,
- a crank linked to the output shaft and configured for transmitting a movement of the output shaft to a linkage rod or a wiper arm,
wherein the output shaft and the crank are made of a single monobloc element comprising at least one angled portion, wherein the single monobloc element is made of plastic and wherein the drive unit comprises a gearwheel and the output shaft comprises grooves configured for receiving complementary grooves of the gearwheel to ensure the coupling of the output shaft with the gearwheel.

The single monobloc element enables to suppress the assembly step leading to an easier and cheaper manufacturing process.

According to another aspect of the present invention, the windscreen wiper unit comprises a ball stud for fixing the linkage rod to the crank wherein the ball stud, the crank and the output shaft are made of a single monobloc element.

According to a further aspect of the present invention, the crank comprises at least one flat part configured for reinforcing the crank.

The flat part also enables to provide space around the crank which may ease the mounting on a vehicle.

According to an additional aspect of the present invention, the angle of the angled portion is comprised between 80 and 100°, in particular 90°.

The use of plastic allows easing even more the process and reducing the weight of the element.

According to a further aspect of the present invention, the single monobloc element is reinforced with resistant fibers, such as natural fibers, or with metal or with talc, such as talcum powder.

The resistant fibers allow resisting to the mechanical contraints undergone by the element.

According to an additional aspect of the present invention, the resistant fibers are chosen among the following list:
- carbon fibers,
- fiberglass,
- aramid fibers.

According to another aspect of the present invention, the ratio of resistant fibers is comprised between 30% and 60%.

According to a further aspect of the present invention, the drive unit comprises a gearwheel that is overmolded on the output shaft.

According to an additional aspect of the present invention, the drive unit comprises a gearwheel and the output shaft comprises grooves configured for receiving complementary grooves of the gearwheel to ensure the coupling of the output shaft with the gearwheel.

The invention will be better understood, and other objects, details, features and advantages of the latter will appear more clearly, during the detailed explanatory description that follows of several embodiments of the invention given as examples that are purely illustrative and not limiting, with reference to the appended schematic drawings.
- Fig.1 is a schematic drawing of a windscreen wiper unit according to the state of the art;
- Fig.2 is a schematic drawing of a windscreen wiper unit according to an embodiment of the present invention;
- Fig.3 is a diagram of the different steps of the manufacturing process of a metallic monobloc element comprising an output shaft, a crank and a ball stud according to an embodiment of the present invention;
- Fig.4a-4h are schematic drawings of a metallic monobloc element comprising an output shaft, a crank and a ball stud at different steps of the manufacturing process;
- Fig.5 is a schematic drawing of a windscreen wiper unit according to another embodiment of the present invention.

In these figures, the elements having the same reference correspond to elements having a similar function.

Besides, the following embodiments are examples. Although the description refers to one or several embodiments, it does not mean that each reference refers to the same embodiment or that the described features apply only for this same embodiment. Features from different embodiments can also be combined to produce additional embodiments.

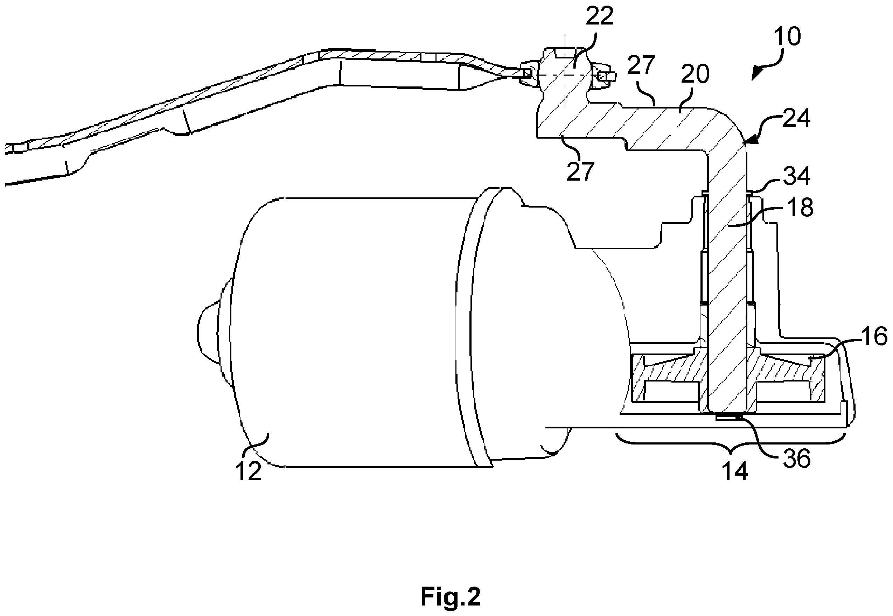

Fig.2 represents a schematic drawing of a windscreen wiper unit 10 according to a first configuration. The windscreen wiper unit 10 comprises an electric motor 12, a drive unit 14 coupled to the electric motor 12. The drive unit 14 comprises a gearwheel 16 driven by the electric motor 12. The windscreen wiper unit 10 also comprises an output shaft 18, a crank 20 and a ball stud 22 which are combined in a single monobloc angled element 24. The angle of the angled part is for example comprised between 80 and 100° depending on the orientation of the linkage rod mounted on the ball stud 22. In fig.2, the angle between the output shaft part 18 and the crank part 20 is 90°. The angle between the crank part and the ball stud part is also 90°.

Furthermore, in order to maximize the transmission of the torque provided by the electric motor 12, the crank part 20 is flattened on the side comprising the ball stud part 22 and the side comprising the output shaft part 18 leading to flat parts 27 on the crank part 20. Such flat parts 27 may also ease the mouting of the wiper motor unit 10 on the motor vehicle as it creates some clearances between the drive unit 14 and the crank part 20. The monobloc angled element 24 is tight to the drive unit 14 in the axial direction by a shoulder 34 of the monobloc angled element 24 and a retainer 36 such as a screw allowing to adjust the clearance between the monobloc angled element 24 and the drive unit 14.

According to a first embodiment (not claimed), the single monobloc angled element 24 is a metallic piece obtained from a metallic rod. In particular, the ball stud part 22 is obtained by a cold forming process which will be described in more detail in the following of the description and the crank part 20 and the output shaft part 18 are obtained by bending the metallic rod of the required angle. The crank part 20 is finally flattened by pressing both side of the crank part 20. Grooves can be formed on the output shaft part 18, for example by a cold forming process and complementary grooves can be arranged in the gearwheel 16, the said grooves ensuring the coupling between the gearwheel 16 and the output shaft part 18.

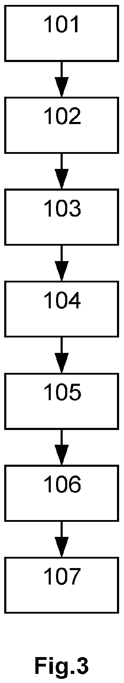

The different steps of the manufacturing process of the metallic monobloc element will now be described in details based on fig.3.

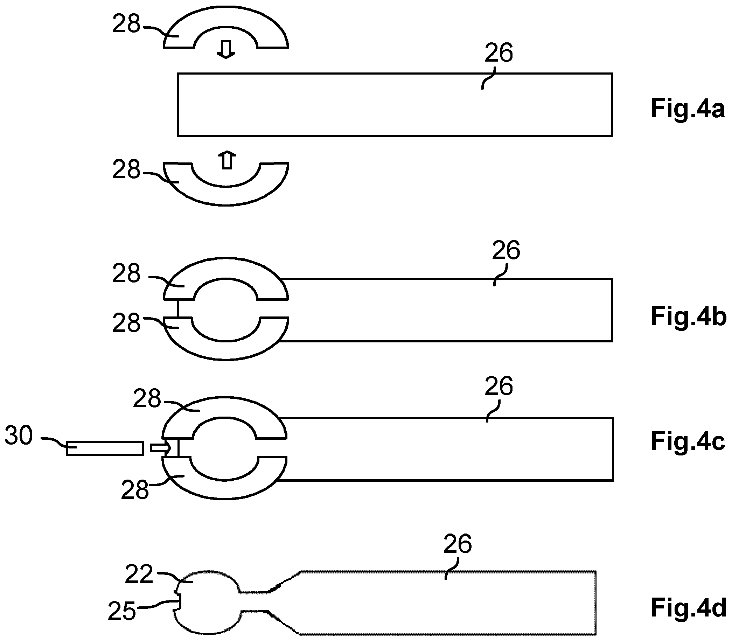

The first step 101 refers to the manufacturing of a metallic rod 26 (represented in fig.4a) having a predetermined diameter and a predetermined length, for example a 12mm diameter and a 100 mm length.

The second step 102 refers to the forming of the ball stud part 22 at a first extremity of the metallic rod 26. This step is achieved by a cold forming process represented in fig.4a and 4b wherein the extremity of the metallic rod 26 is compressed in a die 28 having the desired shape for the ball stud part 22.

The third step 103 refers the stamping of the extremity of the ball stud part 22 represented in fig.4c. Indeed, as the dimensions of the rod 26, notably its diameter, may vary from one rod to another depending on the manufacturing tolerances, for example the diameter may be 11,95mm instead of 12mm, a stamp 30 is used to compensate for such variations. Thus, the diameter is measured and if the measured value is smaller than 12mm, a stamp 30 of a volume equivalent to the difference of volume with a cylinder of 12mm is used to punch the extremity of the ball stud part 22 in order to make a stamping hole 25. Such stamping hole 25 ensures that no gap remains between the ball stud part 22 and the die 28 so that the shape of the ball stud part 22 corresponds to the shape of the die 28. Fig.4d represents the element obtained after the forming of the ball stud part 22.

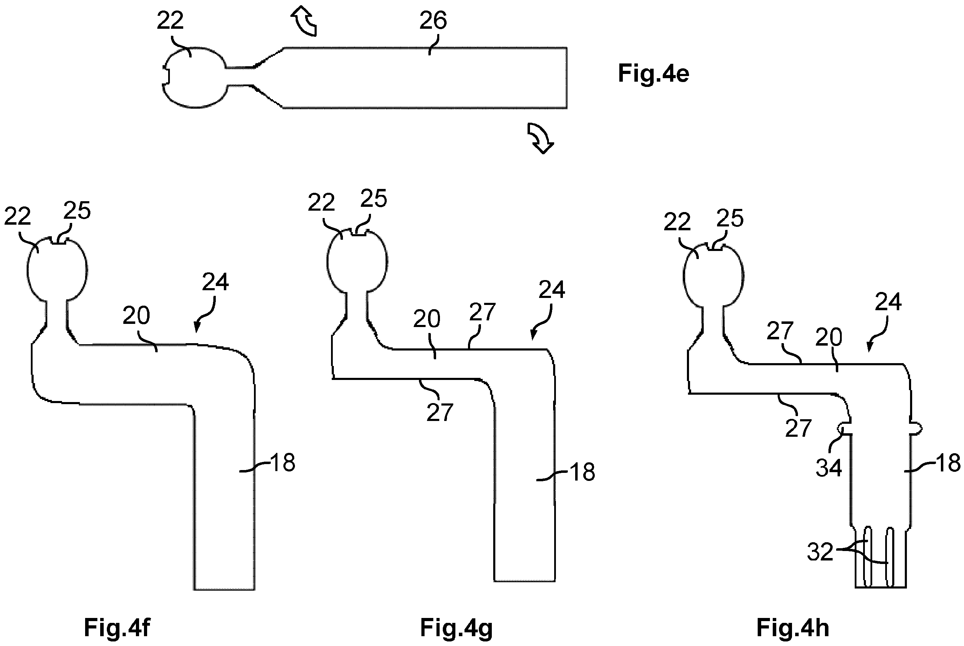

The fourth step 104 corresponds to the bending of the metallic rod 26 to define the crank part 20 and the output shaft part 18 as represented by the arrows in fig.4e. Such bending is also achieved near ambient temperature. Fig.4f represents a schematic drawing of the element 24 obtained after bending of the metallic rod 26.

The fifth step 105, which is optional, corresponds to the flattening of the crank part 20 to obtain flat parts 27. Such flattening is also achieved for example by cold forming process by compression of the crank part 20. Fig.4g represents the element 24 obtained after flattening of the crank part 20.

The sixth step 106, which is an optional step, corresponds to the forming of grooves 32 on the output shaft part 18 as represented in fig.4h. Such grooves forming can also be achieved by cold forming process or riveting.

The seventh step 107 which is also optional and which can be achieved before the step 106 is the forming of a shoulder 34 on the output shaft part 18 to allow blocking axially of the monobloc element 24. Such shoulder 34 can be formed by a cold forming process.

Thus, such manufacturing process enables to obtain a monobloc element 24 comprising an output shaft part 18, a crank part 20 and a ball stud part 22 so that no assembling or crimping steps are necessary. Furthermore, the cold forming process ensures that the metal keeps its properties and the monobloc element 24 provides a higher stiffness than assembled parts.

The monobloc element 24 has also to be assembled with the other parts of the windscreen wiper unit 10 such as the bearing, the gear housing and the gearwheel and it has to be noted that some assembling steps, for example with the bearing and the gear housing can be achieved before or after the step of forming the grooves described previously.

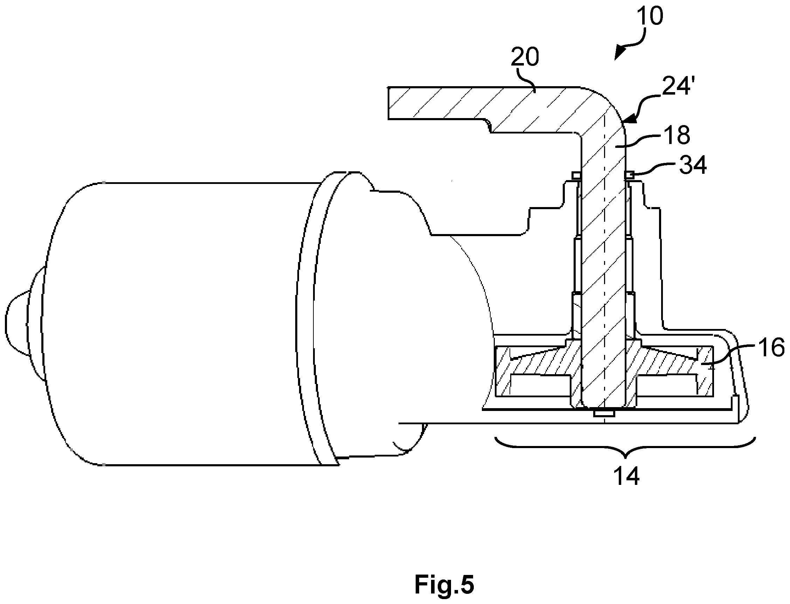

Besides, in some wipers models, there is no ball stud 22 and the wiper is mounted directly on the crank 20. In such case, the single metallic monobloc element 24' comprises only an output shaft part 18 and a crank part 20 as represented in fig.5. The manufacturing process is the same as disclosed previously but the steps 102 and 103 are cancelled.

According to the invention, the single monobloc element 24, 24' is made of plastic. The plastic is reinforced with resistant fibers such as carbon fibers, aramid fibers, fiberglass or any other resistant fibers known by the man skilled in the art. A combination of different resistant fibers may also be used. The resistant fibers allow the plastic monobloc element 24, 24' resisting to the mechanical constraints undergone by the element 24, 24' and transmitting efficiently the torque of the wiper motor. The monobloc element 24, 24' is made for example by injection. The plastic matrix is for example made of polyamid or any other plastic component compatible with the chosen resistant fibers and avoiding problems of water absorption before injection. The proportion of resistant fibers is for example comprised between 30 and 60%. The resistant fibers may be equally distributed within the element but the percentage of resistant fibers may also be higher in areas with more mechanical constraints such as the bending portions. Furthermore, according to the invention, grooves 32 are made in the output shaft part 18 to ensure a coupling with complementary grooves of the gearwheel. In case of grooves 32 on the output shaft part 18, the percentage of resistant fibers may also be higher in the grooves 32 area. Besides, as for the first embodiment, the single monobloc element 24, 24' may comprise only an output shaft part 18 and a crank part 20 or may also comprises a ball stud part 22. The injection enables to obtain any desired shape so that the crank part 20 may comprises flat parts 27 as described in the first embodiment. Such embodiment enables to ease even more the manufacturing process and enables also to reduce the weight of the set comprising the output shaft 18, the crank 20 and possibly the ball stud 22.

Thus, the single monobloc element 24, 24' comprising an output shaft part 18, a crank part 20 and possibly a ball stud part 22 made of reinforced plastic enables to provide a simple manufacturing process and eases the assembly of the windscreen wiper unit 10 while providing a high stiffness without requiring low tolerance material. These features enable to reduce the overall costs of the wiper unit 10 without disturbing its functioning.

## Claims

1. Windscreen wiper unit (10) for a motor vehicle comprising :
- a wiper motor (12),
- a drive unit (14) with an output shaft (18),
- a crank (20) linked to the output shaft (18) and configured for transmitting a movement of the output shaft (18) to a linkage rod or a wiper arm,
the output shaft (18) and the crank (20) being made of a single monobloc element (24, 24') comprising at least one angled portion, **characterized in that** the single monobloc element (24, 24') is made of plastic and **in that** the drive unit (14) comprises a gearwheel (16) and the output shaft (18) comprises grooves (32) configured for receiving complementary grooves of the gearwheel (16) to ensure the coupling of the output shaft (18) with the gearwheel (16).

2. Windscreen wiper unit (10) in accordance with claim 1 comprising a ball stud (22) for fixing the linkage rod to the crank (20) wherein the ball stud (22), the crank (20) and the output shaft (18) are made of a single monobloc element (24).

3. Windscreen wiper unit (10) in accordance with claim 1 or 2 wherein the crank (20) comprises at least one flat part (27) configured for reinforcing the crank (20).

4. Windscreen wiper unit (10) in accordance with one of the previous claims wherein the angle of the angled portion is comprised between 80 and 100°, in particular 90°.

5. Windscreen wiper unit (10) in accordance with one of the previous claim, wherein the single monobloc element (24, 24') is reinforced with resistant fibers, such as natural fibers, or with metal or with talc, such as talcum powder.

6. Windscreen wiper unit (10) in accordance with claim 5 wherein the resistant fibers are chosen among the following list :
- carbon fibers,
- fiberglass,
- aramid fibers.

7. Windscreen wiper unit in accordance with claim 5 or 6 wherein the ratio of resistant fibers is comprised between 30% and 60%.

## Patentansprüche

1. Scheibenwischereinheit (10) für ein Motorfahrzeug, umfassend:
- einen Wischermotor (12);
- eine Antriebseinheit (14) mit einer Abtriebswelle (18),
- einen Kurbelarm (20), der mit der Abtriebswelle (18) verknüpft ist und ausgestaltet ist, um eine Bewegung der Abtriebswelle (18) auf ein Anlenkgestänge oder einen Wischerarm zu übertragen,
wobei die Abtriebswelle (18) und der Kurbelarm (20) aus einem einzelnen Monoblockelement (24, 24') gefertigt sind, das mindestens einen gewinkelten Abschnitt umfasst,
**dadurch gekennzeichnet, dass**
das einzelne Monoblockelement (24, 24') aus Kunststoff gefertigt ist, und die Antriebseinheit (14) ein Zahnrad (16) umfasst, und die Abtriebswelle (18) Rillen (32) umfasst, die ausgestaltet sind, um komplementäre Rillen des Zahnrads (16) aufzunehmen, um die Kopplung der Abtriebswelle (18) mit dem Zahnrad (16) sicherzustellen.

2. Scheibenwischereinheit (10) nach Anspruch 1, umfassend einen Kugelbolzen (22) zum Fixieren des Anlenkgestänges an dem Kurbelarm (20), wobei der Kugelbolzen (22), der Kurbelarm (20) und die Abtriebswelle (18) aus einem einzelnen Monoblockelement (24) gefertigt sind.

3. Scheibenwischereinheit (10) nach Anspruch 1 oder 2, wobei der Kurbelarm (20) mindestens ein flaches Teil (27) umfasst, das ausgestaltet ist, um den Kurbelarm (20) zu verstärken.

4. Scheibenwischereinheit (10) nach einem der vorhergehenden Ansprüche, wobei der Winkel des gewinkelten Abschnitts zwischen 80 und 100° liegt, insbesondere 90°.

5. Scheibenwischereinheit (10) nach einem der vorhergehenden Ansprüche, wobei das einzelne Monoblockelement (24, 24') mit widerstandsfähigen Fasern, wie Naturfasern, oder mit Metall oder mit Talk, wie Talkumpulver, verstärkt ist.

6. Scheibenwischereinheit (10) nach Anspruch 5, wobei die widerstandsfähigen Fasern ausgewählt sind aus der folgenden Liste:
- Kohlefasern,
- Fiberglas,
- Aramidfasern.

7. Scheibenwischereinheit nach Anspruch 5 oder 6, wobei das Verhältnis der widerstandsfähigen Fasern zwischen 30 % und 60 % liegt.

## Revendications

1. Unité d'essuie-glace (10) pour un véhicule automobile comprenant :
- un moteur d'essuie-glace (12),
- une unité d'entraînement (14) avec un arbre de sortie (18),
- une manivelle (20) reliée à l'arbre de sortie (18) et configurée pour transmettre un mouvement de l'arbre de sortie (18) à une tige de liaison ou à un bras d'essuie-glace,
l'arbre de sortie (18) et la manivelle (20) étant constitués d'un seul élément monobloc (24, 24') comprenant au moins une partie angulaire,
**caractérisé en ce que**
le seul élément monobloc (24, 24') est en matière plastique et **en ce que** l'unité d'entraînement (14) comprend une roue dentée (16) et l'arbre de sortie (18) comprend des gorges (32) configurées pour recevoir des gorges complémentaires de la roue dentée (16) pour assurer l'accouplement de l'arbre de sortie (18) avec la roue dentée (16).

2. Unité d'essuie-glace (10) selon la revendication 1, comprenant un goujon sphérique (22) pour fixer la tige de liaison à la manivelle (20), dans laquelle le goujon sphérique (22), la manivelle (20) et l'arbre de sortie (18) sont constitués par un seul élément monobloc (24).

3. Unité d'essuie-glace (10) selon la revendication 1 ou 2, dans laquelle la manivelle (20) comprend au moins une partie aplatie (27) configurée pour renforcer la manivelle (20).

4. Unité d'essuie-glace (10) selon l'une des revendications précédentes, dans laquelle l'angle de la partie angulaire est compris entre 80 et 100°, en particulier 90°.

5. Unité d'essuie-glace (10) selon l'une des revendications précédentes, dans laquelle le seul élément monobloc (24, 24') est renforcé par des fibres résistantes, telles que des fibres naturelles, ou par du métal ou du talc, tel que du talc en poudre.

6. Unité d'essuie-glace (10) selon la revendication 5, dans laquelle les fibres résistantes sont choisies parmi la liste suivante :
- fibres de carbone,
- fibre de verre,
- fibres d'aramide.

7. Unité d'essuie-glace selon la revendication 5 ou 6, dans lequel le rapport des fibres résistantes est compris entre 30% et 60%.
